# EUROPÄISCHE PATENTSCHRIFT

(11) **EP 0 741 651 B1**
(45) Veröffentlichungstag und Bekanntmachung des Hinweises auf die Patenterteilung: **21.06.2000**
(21) Anmeldenummer: 95932630.7
(22) Anmeldetag: 28.09.1995
(51) Int. Cl.: B60R 25/04

(54) **SERVICEFREUNDLICHE WEGFAHRSPERRE**
EASILY SERVICED IMMOBILISER
DISPOSITIF INTERDISANT L'UTILISATION D'UN VEHICULE ET PERMETTANT UN ENTRETIEN AISE DES UNITES FONCTIONNELLES DU MOTEUR

(30) Priorität: 19.10.1994 DE 4437334
(43) Veröffentlichungstag der Anmeldung: 13.11.1996
(73) Patentinhaber: ROBERT BOSCH GMBH, 70442 Stuttgart (DE)
(72) Erfinder: FISCHER, Werner, D-71296 Heimsheim (DE); LAICHINGER, Martin, D-73061 Ebersbach (DE)
(74) Vertreter: Röser, Peter, Dipl.-Ing.
(86) Internationale Anmeldenummer: DE9501343
(87) Internationale Veröffentlichungsnummer: WO9612631

(56) Entgegenhaltungen:
- EP-A- 0 372 741
- WO-A-91/07297
- WO-A-93/05987
- GB-A- 2 251 503

## Beschreibung

### Stand der Technik

Die Erfindung geht aus von einer Einrichtung nach der Gattung des Hauptanspruchs. Einrichtungen dieser Art werden zunehmend eingesetzt, um einer steigenden Zahl von Fahrzeugdiebstählen zu begegnen. Ihre Arbeitsweise beruht darauf, die Funktion von für den Fahrzeugbetrieb zwingend benötigten Steuereinrichtungen, wie etwa einer Einrichtung zur Betätigung des Dieselabsperrventils oder des Motorsteuergeräts, nur freizugeben, wenn ein vom Benutzer einzugebender Code mit einem in der Steuereinrichtung vorab gespeicherten Code übereinstimmt. Eine besondere Betriebssituation ergibt sich, wenn die die Motorfunktionseinheit steuernde Steuereinrichtung vom Fahrzeug getrennt betrieben werden soll. Typisch tritt dieser Fall bei der Motorwartung auf, wenn beispielsweise die Dieselpumpe, und damit zwangsläufig auch die das Dieselabsperrventil steuernde Einrichtung auf einer Prüfbank geprüft werden. Die Funktionseinheit muß dann extern, das heißt ohne Einbeziehung der hierfür im Fahrzeug vorhandenen Legitimationsprüfungseinrichtung, freischaltbar sein. In einfacher Weise kann dies erfolgen, indem der sonst von einem Diebstahlschutzsteuergerät zugeführte Code manuell mit hierfür geeigneten Eingabemitteln zugeführt wird. Der richtige Code muß dabei der die Prüfung durchführenden Person bekannt sein. Dies ist jedoch sowohl in Bezug auf die Servicefreundlichkeit als auch hinsichtlich der Sicherheitswirkung nachteilig. Der Fahrzeugbesitzer muß nämlich zum einen den Code kennen. Häufig erfolgt aber die Übergabe des Codes an das Fahrzeug ohne Einwirkung des Benutzers, beispielsweise in Form einer Transponderlösung. Der Benutzer kennt den richtigen Code hierbei in der Regel gar nicht. Er muß deshalb, beispielsweise auf einer Karte, extern registriert sein. Automatisch wächst damit aber die Gefahr, daß der Benutzer eine solche Karte verlegt. Zum anderen erleichtert die Möglichkeit, eine Funktionseinheit durch externe Zuführung des richtigen Codes unter Umgehung des Diebstahlschutzsteuergeräts freizuschalten, die Inbetriebnahme des Fahrzeugs durch einen unrechtmäßigen Benutzer. Er benötigt hierzu im wesentlichen nur externe Entriegelungsmittel zur manuellen Entriegelung, wie sie beispielsweise auch von einer Werkstatt zur rechtmäßigen Motorwartung eingesetzt werden. Verschafft ein solchermaßen ausgerüsteter Dieb sich zusätzlich den Code, kann er ein Fahrzeug ohne Mühe in Betrieb nehmen.

Aus der EP-A-372 741 ist eine Wegfahrsperre für ein Kraftfahrzeug bekannt. Zur Benutzerlegitimationsprüfung wird von einer Signaleinheit ein codiertes Signal an eine Decodiereinheit gesendet. Stimmt das decodierte gesendete Signal mit einem in einem Steuergerät gespeicherten überein, wird ein Motorsteuergerät aktiviert. An das Steuergerät kann eine Diagnoseeinheit angeschlossen werden, um im Rahmen einer Routineuntersuchung einen großen Bereich von Funktionen im Fahrzeug zu prüfen. Zu diesem Zweck muß der Benutzer das zu wartende Kraftfahrzeug identifizieren, was beispielsweise über die Eingabe einer Identifikationsnummer erfolgt Diese Identifikationsnummer ist auch in dem Steuergerät hinterlegt. In einem Testzyklus kann diese hinterlegte Identifikationsnummer ausgelesen und angezeigt werden, um diese mit der eingeschriebenen Identifikationsnummer zu vergleichen. Bei einer Abweichung wird dies als Indiz dafür genommen, daß es sich um ein gestohlenes Fahrzeug handelt.

Aufgabe der vorliegenden Erfindung ist es deshalb, eine Diebstahlschutzeinrichtung für Kraftfahrzeuge so auszubilden, daß sie ohne Einschränkung der Sicherheitswirkung eine einfache Wartung der in die Schutzeinrichtung einbezogenen Motorfunktionseinheit gestattet.

Diese Aufgabe wird gelöst durch eine Einrichtung mit den Merkmalen des Hauptanspruchs. Die Entriegelung einer geschützten Motorkomponente ist nur durch eine spezielle, außerordentliche Entriegelungsprozedur möglich. Sie umfaßt insbesondere Schritte, welche den Ablauf von Wartezeiten erfordern. Dadurch ist es unrechtmäßigen Benutzern, selbst wenn sie über die erforderlichen Freigabemittel verfügen, nicht möglich, ein Fahrzeug ohne Legitimation in kurzer Zeit in Betrieb zu nehmen. Für Wartungsaufgaben stört die zeitintensive Freischaltprozedur nicht. Sie kann weitestgehend automatisch ablaufen, so daß die aufgezwungene Wartezeit für andere Zwecke verwendet werden kann.

Sehr zweckmäßig ist es, die geschützten Motorkomponenten jeweils mit einer Zeitverzögerungseinrichtung auszurüsten, welche die Inbetriebnahme der zugehörigen Motorkomponente erst nach Ablauf einer vorgegebenen Verzögerungszeit ab Beginn der außerordentlichen Entriegelungsprozedur gestattet.

Die erfindungsgemäße Einrichtung ist kostengünstig herstellbar. Zweckmäßig ist sie als Softwarelösung in Form eines Programmes innerhalb eines für eine geschützte Motorkomponente ohnehin vorhandenen logischen Schaltkreises realisiert. Sie ist dadurch leicht auf vorhandene Anordnungen nachrüstbar.

Eine vorteilhafte Erhöhung der Diebstahlsicherheit ergibt sich, indem während des Ablaufes der Verzögerungszeit periodisch die Zuführung eines vorbestimmten Signales über die Freigabemittel angefordert wird. Der mit der Freigabe befaßte Benutzer ist dadurch genötigt, sich wiederholt zu der freizuschaltenden Motorkomponente zu begeben. Eine unerlaubte, verdeckte Inbetriebnahme des Fahrzeugs ist damit praktisch nicht mehr möglich.

Zur Eingabe der geforderten vorbestimmten Signale weist die externe Inbetriebnahmeeinrichtung zweckmäßig geeignete Eingabemittel auf. Beispielsweise kann es sich hierbei um ein Tastenfeld handeln. Ebenso ist es aber auch möglich, die geforderten vorbestimmten Signale über einen an der Motorkomponente vorhandenen Schalter, beispielsweise das Gaspedal, einzugeben.

Vorteilhaft ist weiterhin, nach Durchführung einer außerordentlichen Inbetriebnahmeprozedur das Fahrzeug für eine vorbestimmte kleine Anzahl von Inbetriebnahmen freizugeben. Die Anzahl richtet sich insbesondere nach den durchschnititlichen Anforderungen im Rahmen der Wartung.

Ein Ausführungsbeispiel der vorgeschlagenen Sicherheitseinrichtung wird nachfolgend unter Bezugnahme auf die Zeichnung näher erläutert.

### Zeichnung

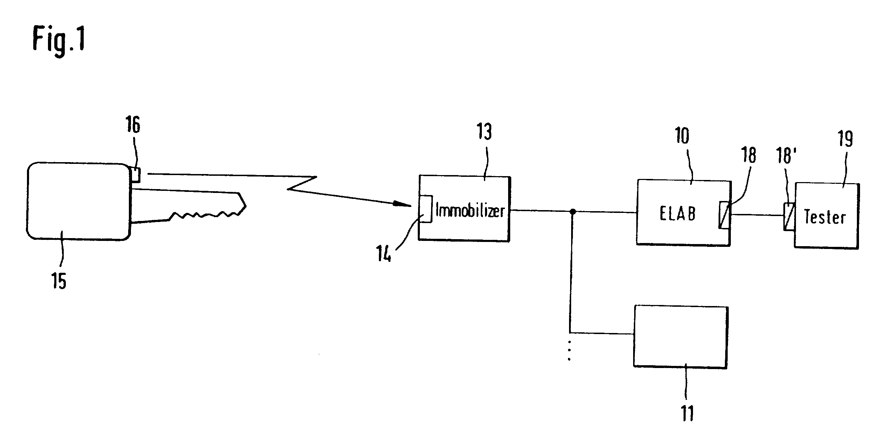

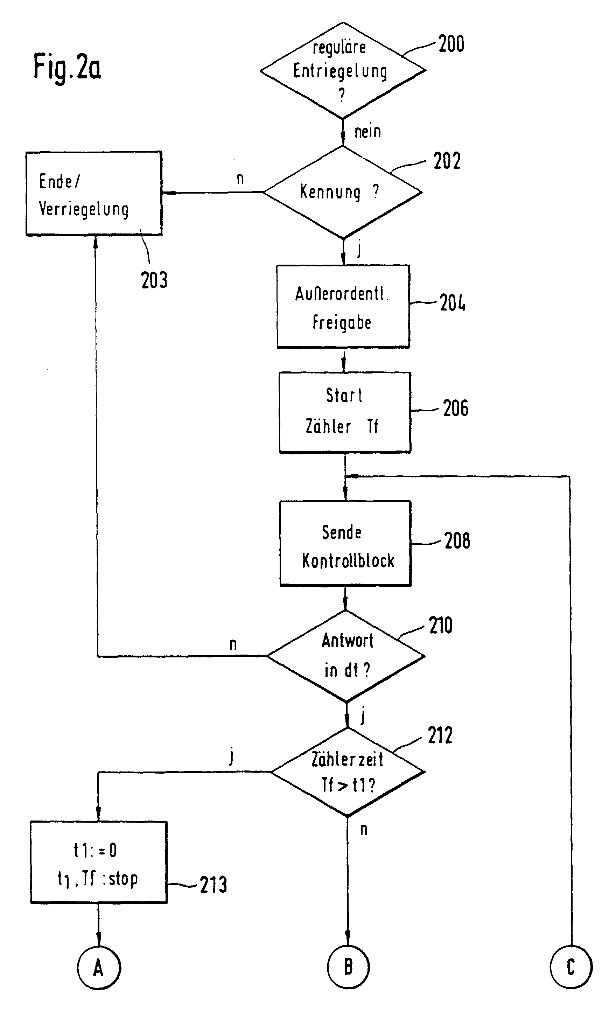

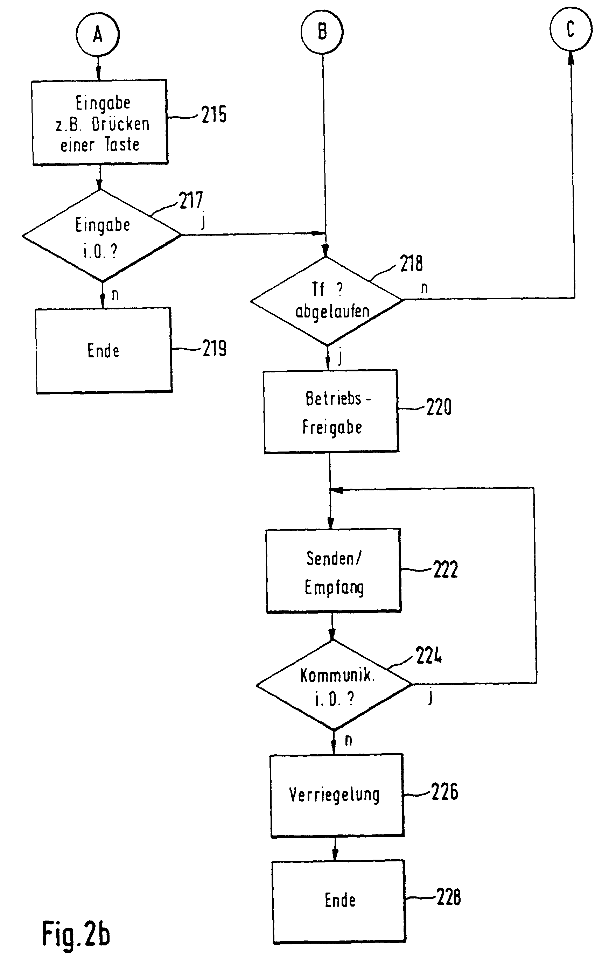

Es zeigen Figur 1 ein Blockschaltbild einer Wegfahrsperre, Figur 2 ein Flußdiagramm des Ablaufs einer außerordentlichen Entriegelungsprozedur.

### Beschreibung der Ausführungsbeispiele

Figur 1 zeigt einen typischen Aufbau einer Diebstahlsicherheitseinrichtung, im folgenden Wegfahrsperre genannt, wie sie der vorliegenden Erfindung zugrundeliegt. Kernstück der gezeigten Anordnung ist ein Diebstahlschutzsteuergerät 13, im folgenden Immobilizer genannt. Mit dem Immobilizer 13 verbunden sind über ein Leitungssystem 12 ein oder mehrere Funktionssteuergeräte 10, 11. Beispielsweise handelt es sich dabei um eine Einrichtung 10 zur Betätigung des Absperrventils an der Dieselpumpe. Alle Funktionssteuergeräte 10, 11 verfügen jeweils über einen eigenen Mikroprozessor beziehungsweise einen ähnlichen, digitale Signale verarbeitenden Schaltkreis. In Verbindung mit einem Steuerprogramm kontrolliert er die von dem Funktionssteuergerät ausgeführten Steuerungsfunktionen. Des weiteren verfügt der Immobilizer 13 über eine Empfangseinrichtung 14 für die Zuführung eines fahrzeug-/benutzerspezifischen Codes zur Legitimationsprüfung. Dieser Code kann, wie in der Figur 1 gezeigt, durch eine Sendeeinrichtung 16 zugeführt sein, welche ihrerseits beispielsweise im Fahrzeugschlüssel angeordnet sein kann. Die Zuführung erfolgt häufig berührungslos, etwa durch ein Infrarot- oder ein Hochfrequenzsignal. Sie kann jedoch auch über ein mit dem Immobilizer 13 über eine Leitung verbundenes Tastenfeld erfolgen. Für die Realisierung der Zuführung des Codes zum Immobilizer 13 gibt es daneben eine Vielzahl weiterer, in der Fachwelt bekannter Varianten.

Die in Figur 1 dargestellte Anordnung arbeitet wie folgt. Für die Inbetriebnahme des Fahrzeugs übergibt der Benutzer dem Immobilizer 13 zunächst den benutzer-/fahrzeugspezifischen Code. Der Immobilizer 13 vergleicht den empfangenen Code mit einem in einem Speicher abgelegten Referenzcode. Stimmen empfangener Code und Referenzcode überein, entriegelt der Immobilizer 13 die Funktionssteuergeräte 10, 11. Hierzu führt er mit den Funktionssteuergeräten 10, 11 jeweils eine reguläre Entriegelungskommunikation durch. Zweckmäßig beinhaltet sie einen weiteren Codevergleich, wobei ein vom Immobilizer erzeugter Code mit einem im Funktionssteuergerät 10, 11 vorhandenen verglichen wird. Die Entriegelungskommunikation stellt sicher, daß der verwendete Immobilizer 13 regulär zu den Funktionssteuergeräten 10, 11 gehört. Verlaufen die Benutzercodeprüfung beziehungsweise die Entriegelungskommunikation in vorbestimmter Weise, stimmen insbesondere die geprüften Codes jeweils mit den vorhandenen Referenzcodes überein, wird der Fahrzeugbetrieb freigegeben. Anderenfalls bleiben die Funktionssteuergeräte 10, 11 gesperrt, so daß ein Fahrzeugbetrieb nicht möglich ist.

Erfindungsgemäß ist eine Freischaltung eines Funktionssteuergerätes 10, 11 auch möglich, wenn es vom Immobilizer 13 beziehungsweise dem Leitungssystem 12 getrennt wurde. Der Fall tritt beispielsweise auf, wenn ein Funktionssteuergerät 10, 11 im ausgebauten Zustand mittels einer externen Einrichtung 19 getestet werden soll. Externe Einrichtung 19 ist dabei in der Regel, wie in Figur 1 angedeutet, ein Diagnosegerät. Über eine Schnittstelle 18, 18' ist es mit den Funktionssteuergeräten 10, 11 verbindbar. Für eine Freischaltung auch in diesem Fall verfügen die Funktionssteuergeräte 10, 11 jeweils über Umgehungsmittel, welche im Anschluß an eine außerordentliche Entriegelungsprozedur eine Freigabe der Funktionssteuergeräte 10, 11 gestatten. Zweckmäßig sind sie in Form eines Programms jeweils innerhalb der Steuerprogramme der Funktionssteuergeräte 10, 11 realisiert.

Figur 2 zeigt den Ablauf einer solchen außerordentlichen Entriegelungsprozedur. Sie startet, indem das Funktionssteuergerät 10, 11 prüft, ob eine reguläre Entriegelungsprozedur durchgeführt wird, Schritt 200. Diese Prüfung ist Bestandteil der regulären Entriegelungsprozedur, sie erfolgt bei jeder Entriegelung. Ist das Ergebnis der Prüfung positiv, wird der eine reguläre Entriegelungsprozedur durchgeführt. Es schließt sich die vorgeschriebene Entriegelungskommunikation an. Ist das Ergebnis der Prüfung im Schritt 200 negativ, prüft das Funktionssteuergerät 10, 11 im Schritt 202, ob die Entriegelung in außerordentlicher Weise durch eine normalerweise nicht zum Fahrzeug gehörende externe Einrichtung 19 erfolgen soll, deren Kennung in einem Speicher in dem Funktionssteuergerät 10, 11 hinterlegt ist. Eine Einrichtung dieser Art ist beispielsweise ein Diagnosegerät 19. Wird versucht, die Entriegelung durch mit einem der Funktionssteuereinheit unbekannten Gerät durchzuführen, dessen Kennung in dem Speicher nicht hinterlegt ist, wird die Entriegelungsprozedur abgebrochen, das Funktionssteuergerät 10, 11 bleibt verriegelt, Schritt 203. Eine Inbetriebnahme des Fahrzeugs ist nicht möglich.

Besitzt die zur Entriegelung verwendete externe Einrichtung 19 dagegen eine dem Funktionssteuergerät 10, 11 bekannte Kennung, wird im Schritt 204 die außerordentliche Freigabeprozedur eingeleitet. Im Schritt 206 wird hierbei ein erster Zähler gestartet, welcher den Ablauf einer Freigabezeit T_{F} erfaßt. Sie legt fest, um welche Zeit die tatsächliche Betriebsfreigabe des Funktionssteuergerätes 10, 11 gegenüber dem Beginn der außerordentlichen Freigabeprozedur verzögert ist. Ihr Wert liegt im Bereich einiger Minuten, zum Beispiel 15 bis 50 Minuten.

Im Schritt 208 sendet das Funktionssteuergerät 10, 11 der zu Entriegelung eingesetzten externen Einrichtung 19 einen Kontrolldatenblock. Er dient einerseits zur Überprüfung der Verbindungsleitung zwischen externer Einrichtung 19 und Funktionssteuergerät 10, 11, andererseits dazu, sicherzustellen, daß die externe Einrichtung 19 zur außerordentlichen Entriegelung berechtigt ist. Im Schritt 210 überprüft das Funktionssteuergerät 10, 11, ob die externe Einrichtung 19 innerhalb einer vorgegebenen Zeit dt in vorbestimmter Weise geantwortet hat. Ist das Ergebnis dieser Prüfung negativ, wird die außerordentliche Entriegelung abgebrochen, Schritt 203, das Funktionssteuergerät verriegelt.

Ist das Ergebnis der Prüfung im Schritt 210 positiv, wird im Schritt 212 geprüft, ob die Zählerzeit T_{f} größer ist als ein vorgegebenes Zeitfenster t₁. Das Zeitfenster legt fest, zu welchen Zeitpunkten ein Benutzer im Rahmen einer außerordentlichen Entriegelungsprozedur zu einer Eingabe aufgefordert wird. Es ist beispielsweise gemäß der Beziehung t₁/T_{F} = 3 dimensioniert, so daß innerhalb der Freigabezeit T_{F} drei zusätzliche Eingaben notwendig sind. Ist das Zeitfenster t1 nicht abgelaufen, prüft das Funktionssteuergerät im Schritt 218, ob die Freigabezeit T_{F} abgelaufen ist. Ist dies ebenfalls nicht der Fall, werden die Schritte 208 bis 218 wiederholt.

Ergibt die Prüfung im Schritt 212, daß das Zeitfenster t1 abgelaufen ist, wird es im Schritt 213 zunächst auf den Wert 0 zurückgesetzt. Sodann wird der Ablauf des Zeitfensters T_{F} unterbrochen. Das Funktionssteuergerät 10, 11 wartet nun auf eine über die externe Einrichtung 19 vorzunehmende Eingabe. Sie kann beispielsweise im Drücken einer Taste oder in der Eingabe eines Codes bestehen. Im Schritt 217 prüft es, ob die Eingabe erfolgt ist. Ist dies der Fall, wird das Zeitfenster T_{F} wieder gestartet, Schritt 219, anschließend wird Schritt 218 ausgeführt.

Ergibt die Prüfung im Schritt 217, das keine Eingabe erfolgte, oder das eine Eingabe nicht eine vorgestimmte Form aufweist, wird die außerordentliche Freigabeprozedur wiederum abgebrochen, Schritt 219, das Funktionssteuergerät 10, 11 bleibt verriegelt.

Ergibt die Abfrage im Schritt 218, daß die Freigabezeit T_{F} abgelaufen ist, wird das Funktionssteuergerät 10, 11 freigeschaltet. Nach Freigabe des Funktionssteuergerätes 10, 11 erfolgt weiterhin zyklisch eine Prüfkommunikation mit der externen Einrichtung 19. Dabei wird, analog zum Schritt 208 im Schritt 222 ein Kontrollblock an die Einrichtung 19 geschickt. Anschließend wird im Schritt 224 geprüft, ob innerhalb einer vorgegebenen Zeit dt eine vorbestimmte Antwort erfolgt ist und die Kommunikation somit in Ordnung ist. Sodann erfolgt im Schritt 225 eine Prüfung, ob ein das Betriebsende anzeigendes Signal vorliegt. Ist dies der Fall oder ergibt die Prüfung im Schritt 224 einen Kommunikationsfehler, beendet das Funktionssteuergerät 10, 11 seinen Betrieb und verriegelt sich. Liegt ein Signal für das Betriebsende nicht vor und ist die Kommunikation in Ordnung, werden die Schritte 222 bis 225 wiederholt. Unter Beibehaltung des der erfindungsgemäßen Einrichtung zugrundeliegenden Konzeptes ist eine Vielzahl von Abwandlungen möglich. So sind die im Flußdiagramm gemäß Figur 2 wiedergegebenen Ablaufschritte teilweise in ihrer Reihenfolge vertauschbar oder können auch ganz entfallen. Letzteres gilt beispielsweise für die durch die Schritte 211 bis 217 geförderte zusätzliche Eingabe. Auch die Ablaufschritte 208 und 210 beziehungsweise 222 und 224 zur Prüfung der Leitungsverbindung zwischen externer Einrichtung 19 und Funktionssteuergerät 10, 11 können entfallen oder in völlig anderer Weise realisiert sein.

Die Freigabe kann für eine einmalige Inbetriebnahme erfolgen, aber auch für eine vorgegebene kleine Anzahl von Freigaben. Letztere Lösung ist vor allem dann zweckmäßig, wenn ein Funktionssteuergerät 10, 11 bei der Wartung regelmäßig mehrere Male in Betrieb genommen werden muß.

## Patentansprüche

1. Wegfahrsperre für ein Kraftfahrzeug, mit einem Diebstahlschutzsteuergerät (13) zur Durchführung einer Benutzerlegitimationsprüfung sowie wenigstens einem, mit dem Diebstahlschutzsteuergerät (13) über ein Leitungssystem (12) verbundenen Funktionssteuergerät (10, 11) zur Steuerung des Betriebs einer Motorkomponente, wobei das Funktionssteuergerät (10, 11)
- über einen digitale Signale verarbeitenden Schaltkreis verfügt, der eine Inbetriebnahme des Funktionssteuergerätes (10, 11) nur nach Durchführung einer regulären Entriegelungskommunikation mit dem Diebstahlschutzsteuergerät (17) erlaubt, dadurch gekennzeichnet, daß es
- weiterhin Umgehungsmittel (204 bis 220) aufweist, die bei Wegfall der regulären Entriegelungskommunikation eine außerordentliche Entriegelung des Funktionssteuergerätes (10, 11) durch eine fahrzeugexterne Einrichtung (19) gestatten, welche unter Umgehung des Diebstahlschutzsteuergerätes (13) direkt auf das Funktionssteuergerät wirkt.

2. Wegfahrsperre nach Anspruch 1, dadurch gekennzeichnet, daß die Umgehungsmittel (204 bis 220) eine Zeitverzögerungseinrichtung (206, 218) einschließen, die das Funktionssteuergerät (10, 11) bei einer außerordentlichen Entriegelung erst nach Ablauf einer vorgegebenen Verzögerungszeit (T_{F}) ab Beginn der außerordentlichen Entriegelung freigibt.

3. Wegfahrsperre nach Anspruch 1, dadurch gekennzeichnet, daß die Umgehungsmittel (204 bis 220) während des Ablaufs der Verzögerungszeit (T_{F}) periodisch (t1) die Zuführung eines vorbestimmten Signals von der externen Einrichtung (19) anfordern.

4. Wegfahrsperre nach Anspruch 3, dadurch gekennzeichnet, daß die externe Einrichtung (19) Eingabemittel aufweist, über die das vorbestimmte Signal einzugeben ist.

5. Wegfahrsperre nach Anspruch 1, dadurch gekennzeichnet, daß das Funktionssteuergerät (10, 11) bei außerordentlicher Entriegelung für eine vorgegebene Zahl von Entriegelungsvorgängen entriegelt ist.

## Claims

1. Immobilizer for a motor vehicle, having an antitheft control unit (13) for carrying out user-authorization testing and at least one functional control unit (10, 11) connected to the antitheft control unit (13) via a line system (12), for controlling the operation of an engine component, the functional control unit (10, 11)
- having a circuit which processes digital signals and which permits the functional control unit (10, 11) to be put into operation only after a normal enabling communication has been carried out with the antitheft control unit (17), characterized in that
- it also has bypass means (204 to 220) which, if the normal enabling communication does not occur, permit an extraordinary enabling process of the functional control unit (10, 11) by means of a vehicle-external device (19) which acts directly on the functional control unit bypassing the antitheft control unit (13).

2. Immobilizer according to Claim 1, characterized in that the bypass means (204 to 220) include a time-delay device (206, 218) which in the case of an extraordinary enabling process enables the functional control unit (10, 11) only after a predefined delay time (T_{F}) since the start of the extraordinary enabling process has expired.

3. Immobilizer according to Claim 1, characterized in that while the delay time (T_{F}) is running, the bypass means (204 to 220) periodically (t1) request the external device (19) to supply a predetermined signal.

4. Immobilizer according to Claim 3, characterized in that the external device (19) has input means by means of which the predetermined signal is to be input.

5. Immobilizer according to Claim 1, characterized in that in the event of an extraordinary enabling process the functional control unit (10, 11) is enabled for a predefined number of enabling processes.

## Revendications

1. Dispositif d'immobilisation d'un véhicule automobile, comprenant un appareil de commande de protection antivol (13) pour exécuter un contrôle de l'autorisation d'utiliser ainsi qu'au moins un dispositif de commande de fonctionnement (10, 11) relié à l'appareil de commande de protection antivol (13) par un circuit (12), pour commander le fonctionnement d'un composant du moteur, dans lequel le dispositif de commande de fonctionnement (10, 11) dispose d'un circuit de traitement de signaux numériques qui autorise une mise en oeuvre du dispositif de commande de fonctionnement (10, 11) seulement après avoir exécuté une communication de déverrouillage, régulière, avec l'appareil de commande de protection antivol (13),
caractérisé en ce que
le dispositif de commande de fonctionnement comprend en outre des moyens de contournement (204 à 220) qui, en cas de disparition de la communication régulière de déverrouillage, autorisent un déverrouillage exceptionnel du dispositif de commande de fonctionnement (10, 11) par une installation (19) externe au véhicule, qui agit directement sur le dispositif de commande de fonctionnement en contournant l'appareil de commande de protection antivol (13).

2. Dispositif selon la revendication 1,
caractérisé en ce que
les moyens de contournement (204 à 220) comprennent une installation de temporisation (206, 218) qui libère le dispositif de commande de fonctionnement (10, 11) pour un déverrouillage exceptionnel, seulement à la fin d'une durée de temporisation (T_{F}) comptée à partir du début du déverrouillage exceptionnel.

3. Dispositif selon la revendication 1,
caractérisé en ce que pendant la durée de temporisation (T_{F}), les moyens de contournement (204-220) demandent périodiquement (t1) l'envoi d'un signal prédéterminé à partir de l'installation externe (19).

4. Dispositif selon la revendication 3,
caractérisé en ce que
l'installation externe (19) comporte un moyen d'entrée par lequel il faut introduire le signal prédéterminé.

5. Dispositif selon la revendication 1,
caractérisé en ce que
le dispositif de commande de fonctionnement (10, 11) est déverrouillé pour un déverrouillage exceptionnel pour un nombre prédéterminé d'opérations de déverrouillage.
